# EUROPEAN PATENT SPECIFICATION

(11) **EP 0 911 841 B1**
(45) Date of publication and mention of the grant of the patent: **02.01.2003**
(21) Application number: 98120012.4
(22) Date of filing: 22.10.1998
(51) Int. Cl.: H01G 9/20

(54) **Photoelectric conversion device and photoelectrochemical cell**
Photoelektrische Umwandlungsanordnung und photoelektrochemische Zelle
Dispositif de conversion photo-électrique et cellule photoélectrochimique

(30) Priority: 23.10.1997 JP 29143297; 21.11.1997 JP 33811597; 17.07.1998 JP 21977498; 17.07.1998 JP 21977598
(43) Date of publication of application: 28.04.1999
(60) Divisional application: 00126792.1
(73) Proprietor: Fuji Photo Film Co., Ltd., Kanagawa-ken (JP)
(72) Inventor: Shiratsuchi, Kentaro, Minami-ashigara-shi, Kanagawa (JP); Tsukahara, Jiro, Minami-ashigara-shi, Kanagawa (JP); Watanabe, Tetsuya, Minami-ashigara-shi, Kanagawa (JP); Okazaki, Masaki, Minami-ashigara-shi, Kanagawa (JP)
(74) Representative: Patentanwälte Dr. Solf & Zapf

(56) References cited:
- EP-A- 0 692 800
- EP-A- 0 887 817
- WO-A-94/05025
- PATENT ABSTRACTS OF JAPAN vol. 016, no. 288 (E-1223), 25 June 1992 (1992-06-25) & JP 04 073803 A (MITSUBISHI PETROCHEM CO LTD), 9 March 1992 (1992-03-09)
- PYATI R ET AL: "VOLTAMMETRY AND CONDUCTIVITY OF A POLYETHER-PYRIDINIUM ROOM TEMPERATURE MOLTEN SALT ELECTROLYTE AND OF ITS POLYMER ELECTROLYTE SOLUTIONS IN POLYDIMETHYLSILOXANE" JOURNAL OF THE ELECTROCHEMICAL SOCIETY, vol. 143, no. 2, 1 February 1996 (1996-02-01), pages 401-405, XP002051053
- ITO K ET AL: "Ionic conductivity of poly(ethylene oxide) having charges on the chain end" SOLID STATE IONICS, vol. 79, July 1995 (1995-07), page 300-305 XP004050359
- MATSUMOTO M ET AL: "A dye sensitized TiO2 photoelectrochemical cell constructed with polymer solid electrolyte" SOLID STATE IONICS, vol. 89, no. 3-4, 2 August 1996 (1996-08-02), page 263-267 XP004069984
- N. J. CHEREPY, G. P. SMESTAD, M. GRÄTZEL, J. Z. ZHANG: "Ultrafast Electron Injection: Implications for a Photoelectrochemical Cell Utilizing an Anthocyanin Dye-Sensitized TiO" Nanocrystalline Electrode" J. PHYS. CHEM. B., vol. 101, no. 45, 1997, pages 9342-9351, XP002116793
- YONEZAWA Y ET AL: "SPECTRAL SENSITIZATION OF SEMICONDUCTOR AND METAL ELECTRODES BY THE J-AGGREGATES OF CYANINE DYES: ENHANCED CATHODIC PHOTOCURRENT WITH THIACARBOCYANINE DYES HAVING MESO-PHENYL GROUPS" JOURNAL OF IMAGING SCIENCE, vol. 34, no. 6, 1 November 1990 (1990-11-01), pages 249-255, XP000172583
- BUCKLEY R W: "AN INVESTIGATION INTO THE DEPLETION LAYER AND CARRIER PHOTOGENERATION IN MEROCYANINE - CDS PHOTOVOLTAIC CELLS" PROCEEDINGS OF THE INTERNATIONAL PHOTOVOLTAIC ENERGY CONFERENCE, FLORENCE, MAY 9 - 13, 1988, vol. 2, no. CONF. 8, 9 May 1988 (1988-05-09), pages 1028-1032, XP000044478 SOLOMON I;EQUER B; HELM P
- INOUE M ET AL: "PHOTOVOLTAIC CELLS OF MEROCYANINE DYE POLYMER THIN FILMS PREPARED BY PLASMA POLYMERIZATION METHOD" JAPANESE JOURNAL OF APPLIED PHYSICS, vol. 27, no. 6, PART 1, 1 June 1988 (1988-06-01), pages 1059-1065, XP000024252 ISSN: 0021-4922

## Description

This invention relates to a photoelectric conversion device, and more particularly, to a photoelectric conversion device comprising a dye-sensitized nanoparticulate semiconductor. It also relates to a photo-electrochemical cell.

### BACKGROUND OF THE INVENTION

With respect to the solar power generation, monocrystalline silicon solar batteries, polycrystalline silicon solar batteries, amorphous solar batteries, and compound solar batteries using cadmium telluride or indium copper selenide have been used in practice or become the major object of research and development. For the widespread use, problems including the manufacturing cost, the availability of source materials, and a long energy payback period must be solved. On the other hand, many solar batteries using organic materials intended for increasing the surface area and lowering the cost have also been proposed, but they have the drawbacks of low efficiency conversion and poor durability.

International Patent Application No. 93/20565 proposes a photoelectric conversion device using a solid electrolyte. JP-A 288142/1995, Solid State Ionics, 89 (1996), 263, and JP-A 27352/1997 propose photoelectric conversion devices using crosslinked polyethylene oxide solid polymer electrolytes for solidification. However, the photoelectric conversion devices using these solid electrolytes were found to experience a substantial decline of photoelectric conversion properties, especially short-circuiting current density and to be so tacky on their film surface that they are difficult to transport and handle during manufacture.

USP 4,927,721, 4,684,537, 5,084,365, 5,350,644, 5,463,057, 5,525,440 and JP-A 249790/1995 disclose photoelectric conversion devices using semiconductor nanoparticulates sensitised with dyes, which are often referred to as dye-sensitised photoelectric conversion devices, hereinafter, or materials and processes for preparing such converters. A first advantage of this system is that photoelectric conversion devices are obtained at a relatively low cost since inexpensive oxide semiconductors such as titanium dioxide can be used without a need for work-up to a high purity. A second advantage of this system is that photons in almost all the wavelength band of visible light can be converted into electric current since the dyes used have a broad absorption band. These features are advantageous when applied to photoelectric conversion devices for converting solar energy into electricity, that is, so-called solar batteries. Efforts have been made on the application to this field.

In order that dye-sensitised photoelectric conversion devices of this system operate at a high conversion efficiency, expensive ruthenium complex dyes must be used as the sensitising dye, which is a potential barrier against commercial application. For this reason, there is a desire to have a photoelectric conversion device capable of high efficiency photoelectric conversion despite sensitisation with inexpensive dyes such as organic dyes.

The document of Buckley, R.W.: "An Investigation into the Depletion Layer and Carrier Photogeneration in Merocyanine CDS photovoltaic Cells", Proceedings of the International Photovoltaic Energy Conference, Florenz, May 9-13, 1988, Band 2, Nr. Conf. 8, 9. Mai 1988 (1988-05-09), pages 1028-1032, XP000044478 Solomon I.; Equer, B.; Helm, P., discloses a photoelectric conversion device comprising at least a conductive support and a photosensitive layer containing semiconductor nanoparticulates sensitised with a polymethine dye.

EP-A 0,887,817 which is state of the art in sense of Article 54(3) EPC discloses that the semiconductor nanoparticulates can be sensitised with a polymethine dye of the following formula 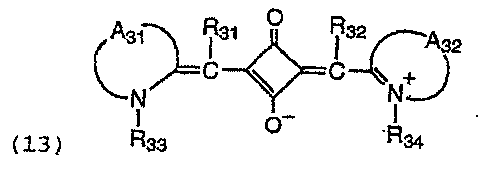 wherein the heterocyles formed by A₃₁ and A₃₂ with the carbon and nitrogen atoms are benzothiazoline and benzothiazole.

The invention provides a photoelectric conversion device defined by the features of claim 1. It comprises at least a conductive support and a photosensitive layer. The photosensitive layer contains semiconductor nanoparticulates sensitised with a polymethine dye of the following general formula (11), (13) or (14).

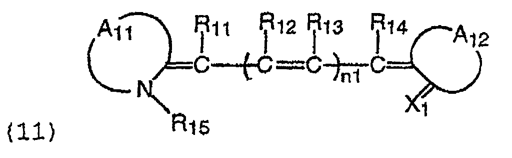

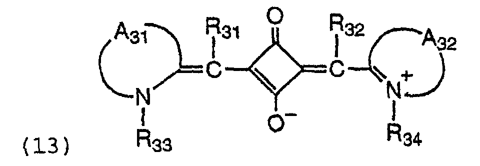

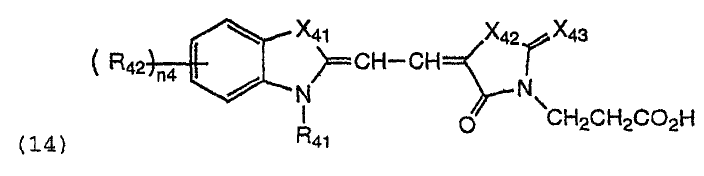

In formula (11), R₁₁, R₁₂, R₁₃, and R₁₄ each are hydrogen or monovalent substituents, or R₁₁ to R₁₄ may bond together to form a ring, R₁₅ is alkyl, A₁₁ and A₁₂ each are a group of atoms to form a 3 to 9-membered ring with the carbon and nitrogen atoms, X₁ is oxygen or sulfur, n₁ is an integer of 1 to 4, the compound of formula (11) has at least one carboxyl group as a substituent, and the compound of formula (11) may have a counter ion depending on the overall electric charge of the molecule. Preferably, the heterocycle that A₁₁ forms with the carbon and nitrogen atoms is benzothiazoline, indoline, naphthothiazoline or benzindoline, and the heterocycle that A₁₂ forms with the carbon atoms is rhodanine. Also preferably, the carboxyl group is attached directly or via an alkylene group to the heterocycle that A₁₁ forms with the carbon atoms.

In formula (13), R₃₁ and R₃₂ each are hydrogen or monovalent substituents, or R₃₁ and R₃₂ may bond together to form a ring, R₃₃ and R₃₄ each are alkyl, A₃₁ and A₃₂ each are a group of atoms to form a 3 to 9-membered ring with the carbon and nitrogen atoms except a benzothiazoline, benzothiazole ring and naphthothiazole, the compound of formula (13) has at least one carboxyl group as a substituent, and the compound of formula (13) may have a counter ion depending on the overall electric charge of the molecule. Preferably, the heterocycle that A₃₁ forms with the carbon and nitrogen atoms is indoline, naphthothiazoline or benzindoline, and the heterocycle that A₃₂ forms with the carbon and nitrogen atoms is selected from quaternary salts of indolenine and benzindolenine.

In formula (14), R₄₁ is alkyl, R₄₂ is a substituent, X₄₁ is an alkylene group, alkylimino group, arylimino group,
oxygen atom or sulfur atom, X₄₂, is an alkylimino group, arylimino group, oxygen atom or sulfur atom, X₄₃, is an oxygen or sulfur atom, n4 is an integer of 0 to 4, andthe compound of formula (14) may have a counter ion depending an the overall electric charge of the molecule. Preferably, both X₄₂, and X₄₃, are sulfur atoms .

In a further preferred embodiment, a steroid compound having a carboxyl group is adsorbed to the semiconductor nanoparticulates along with the polymethine dye.

Also a photo-electrochemical cell is provided comprising the photoelectric conversion device an electric charge transfer layer and a counter electrode.

### BRIEF DESCRIPTION OF THE DRAWINGS

FIG. 1 is a diagrammatic sectional view showing the layer structure of a photo-electrochemical cell according to the invention
FIG. 2 is a diagrammatic sectional view showing the layer structure of a modified photo-electrochemical cell according to the invention

### BEST MODE FOR CARRYING OUT THE INVENTION

The photoelectric conversion device of the invention is defined as comprising a photosensitive layer on a conductive support. The photosensitive layer contains semiconductor nanoparticulates sensitized with a polymethine dye or chromophore. The use of polymethine dyes ensures to fabricate dye-sensitized photoelectric conversion devices having improved conversion efficiency and is cost effective. The polymethine dyes used herein are represented by the general formulas (11), (13) and (14).

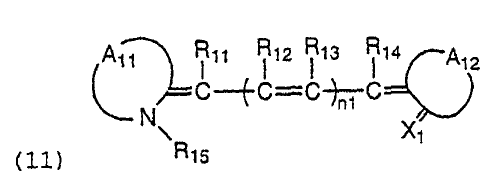

In formula (11), R₁₁, R₁₂, R₁₃, and R₁₄ each are hydrogen or monovalent substituents, with hydrogen being preferred. The monovalent substituents include alkyl (e.g., methyl, ethyl, isobutyl, n-dodecyl, cyclohexyl, vinyl, allyl, and benzyl), aryl (e.g., phenyl, tolyl, and naphthyl), heterocyclic residues (e.g., pyridyl, imidazolyl, furyl, thienyl, oxazolyl, thiazolyl, benzimidazolyl, and quinolyl), halogen atoms (e.g., fluoro, chloro and bromo), alkoxy (e.g., methoxy, ethoxy, and benzyloxy), aryloxy (e.g., phenoxy), alkylthio (e.g., methylthio and ethylthio), arylthio (e.g., phenylthio), hydroxy and oxygen anions, nitro, cyano, amide (e.g., acetylamino and benzoylamino), sulfonamide (e.g., methanesulfonylamino and benzenesulfonylamino), ureido (e.g., 3-phenylureido), urethane (e.g., isobutoxycarbonylamino and carbamoyloxy), ester (e.g., acetoxy, benzoyloxy, methoxycarbonyl, and phenoxycarbonyl), carbamoyl (e.g., N-methylcarbamoyl and N,N-diphenylcarbamoyl), sulfamoyl (e.g., N-phenylsulfamoyl), acyl (e.g., acetyl and benzoyl), amino (e.g., amino, methylamino, anilino, and diphenylamino), sulfonyl (e.g., methylsulfonyl), phosphonyl and esters thereof, phosphonyloxy and esters thereof, carboxyl, and sulfo groups. These substituents may have such substituents attached to the carbon atom or atoms thereof.

The methine chain substituents represented by R₁₁ to R₁₄ may bond together to form a 3 to 9-membered monocyclic or polycyclic, aromatic, heterocyclic or alicyclic ring. Preferred rings are cyclobutene, cyclopentene, cyclohexene, benzene, dehydrodecalin, pyridine, dihydropyridine, tetrahydropyridine, furan, dihydrofuran, thiophene, dihydrothiophene, and hexahydroquinoline. All these rings may have fused thereto a 3 to 8-membered aromatic, heterocyclic or alicyclic ring. In formula (11), R₁₅ is substituted or unsubstituted alkyl having 1 to 12 carbon atoms in total, examples of the alkyl and the substituent thereon being as defined for R₁₁ to R₁₄.

In formula (11), A₁₁ is a group of atoms to form a monocyclic or fused 3 to 9-membered ring with the carbon and nitrogen atoms. The atoms in the atom group to construct a ring are carbon, nitrogen, oxygen, sulfur, selenium and tellurium. The monocyclic or fused 3 to 9-membered ring that A₁₁ forms with the carbon and nitrogen atoms may have substituents as mentioned above. Examples of the monocyclic or fused 3 to 9-membered ring that A₁₁ forms with the carbon and nitrogen atoms include substituted or unsubstituted benzothiazoline, indoline, naphthothiazoline, and benzindoline. A₁₂ is a group of atoms to form a monocyclic or fused 3 to 9-membered ring with the carbon atoms. The atoms in the atom group to construct a ring are carbon, nitrogen, oxygen, sulfur, selenium and tellurium. The monocyclic or fused 3 to 9-membered ring that A₁₂ forms with the carbon atoms may have substituents as mentioned above. Substituted exo-methylene groups are also preferred substituents. The substituents on the substituted exo-methylene groups include cyano, carboxyl, sulfonyl and acyl groups. Examples of the substituted exo-methylene groups are dicyanomethylene, 1-cyano-1-carboxymethylene, 1-methanesulfonyl-1-carboxymethylene, and 1-cyano-1-acetylmethylene. The monocyclic or fused 3 to 9-membered ring that A₁₂ forms with the carbon atoms is preferably substituted or unsubstituted rhodanine.

X₁ is oxygen or sulfur.

In formula (11), n₁ is an integer of 1 to 4. The length of methine chain is adjusted as appropriate for a particular purpose since it is correlated to the absorption wavelength of the dye such that the greater the value of n₁, the longer becomes the wavelength of light that the dye absorbs. From the standpoint of photoelectric conversion efficiency of sunlight, it is preferred that n₁ be equal to 1.

The compound of formula (11) may have a counter ion depending on the overall electric charge of the molecule. The counter ion is not critical and may be either organic or inorganic. Typical examples include anions such as halide (e.g., fluoride, chloride, bromide and iodide ions), hydroxyl, perchlorate, tetrafluoroborate, hexatluorophosphate, acetate, trifluoroacetate, methanesulfonate, para-toluenesulfonate, and trifluoromethanesulfonate ions; and cations such as alkali metals (e.g., lithium, sodium and potassium), alkaline earth metals (e.g., magnesium and calcium), ammonium, alkyl ammonium (e.g., diethylammonium and tetrabutylammonium), pyridinium, alkylpyridinium (e.g., methylpyridinium), guanidinium, and tetraalkylphosphonium.

The compound of formula (11) has at least one carboxyl group as a substituent. It is especially preferred that the carboxyl group be attached directly or via an alkylene group to the heterocycle that A₁₂ forms with the carbon atoms. The carboxyl group may form a salt with an alkali metal ion, ammonium or another organic cation. It may also form an intramolecular salt.

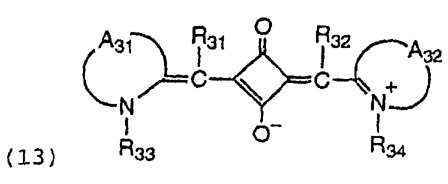

In formula (13), R₃₁ and R₃₂ are as defined for R₁₁ in formula (11). R₃₃ and R₃₄ are as defined for R₁₅ in formula (11). A₃₁ is as defined for A₁₁ in formula (11). A₃₂ is a group of atoms to form a monocyclic or fused 3 to 9-membered ring with the carbon and quaternary nitrogen atoms. The atoms in the atom group to construct a ring are carbon, nitrogen, oxygen, sulfur, selenium and tellurium. The monocyclic or fused 3 to 9-membered ring that A₃₂ forms with the carbon and nitrogen atoms except a benzothiazoline, benzothiazole ring and naphthothiazole may have substituents as mentioned above. Preferred examples of the monocyclic or fused 3 to 9-membered ring that A₃₂ forms with the carbon and nitrogen atoms are quaternary salts of substituted or unsubstituted indolenines, and quaternary salts of substituted or unsubstituted benzindolenines.

The compound of formula (13) may have a counter ion as mentioned above, depending on the overall electric charge of the molecule. The compound of formula (13) has at least one carboxyl group as a substituent. The carboxyl group may form a salt with an alkali metal ion, ammonium or another organic cation. It may also form an intramolecular salt.

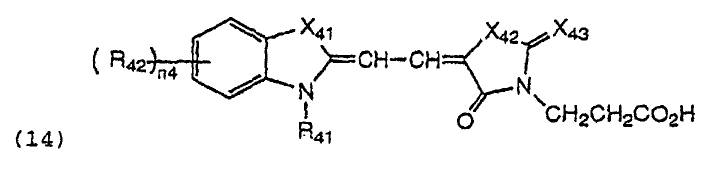

In formula (14), R₄₁ is as defined for R₁₅ in formula (11). R₄₂ is as defined for R₁₁ in formula (11). X₄₁ represents substituted or unsubstituted alkylene having 1 to 15 carbon atoms in total (e.g., methylene, ethylene, vinylene, and phenylene), substituted or unsubstituted alkylimino having 1 to 15 carbon atoms in total (e.g., methylimino, ethylimino, butylimino, and dodecylimino), arylimino (e.g., phenylimino), oxygen atoms, and sulfur atoms. Where these groups are substituted, such substituents are as defined for R₁₁ in formula (11). X₄₁ is preferably a sulfur atom. X₄₂ represents substituted or unsubstituted alkylimino groups having 1 to 15 carbon atoms in total, substituted or unsubstituted arylimino groups having 1 to 15 carbon atoms in total, oxygen atoms, and sulfur atoms. Where these groups are substituted, such substituents are as defined for R₁₁ in formula (11). X₄₃ is an oxygen or sulfur atom. It is preferred that both X₄₂ and X₄₃ be sulfur atoms. Letter n₄ is an integer of 0 to 4.

The compound of formula (14) may have a counter ion as mentioned above, depending on the overall electric charge of the molecule.

Preferred, non-limiting examples of the polymethine dyes of formulas (11), (13) and (14) are given below.

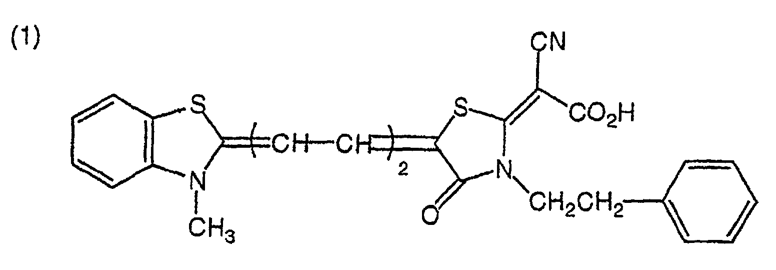

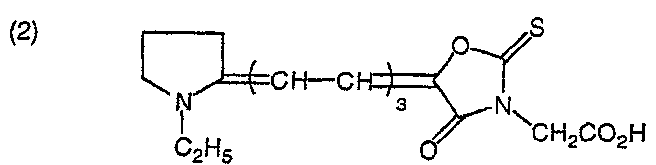

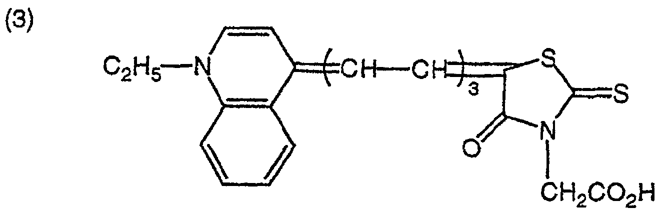

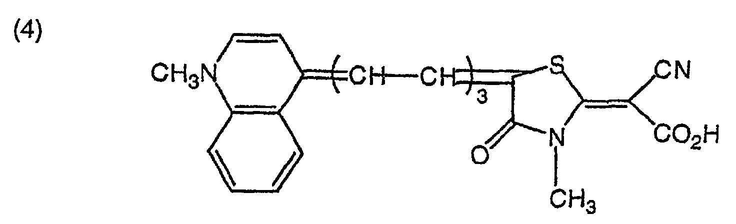

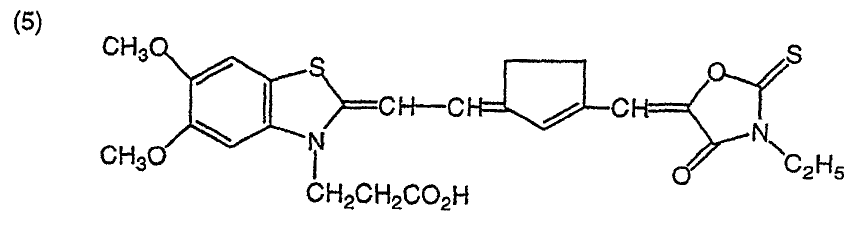

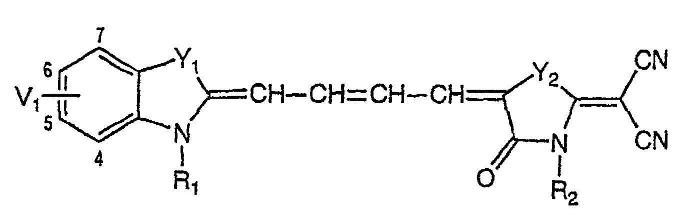

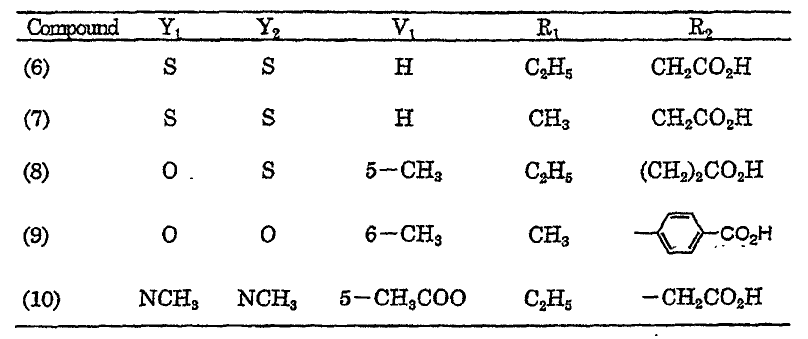

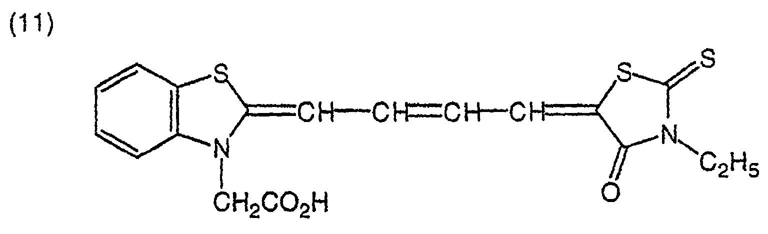

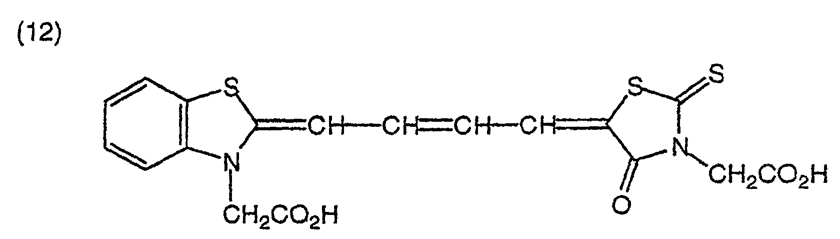

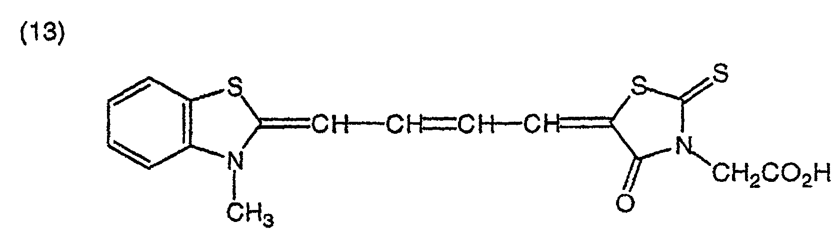

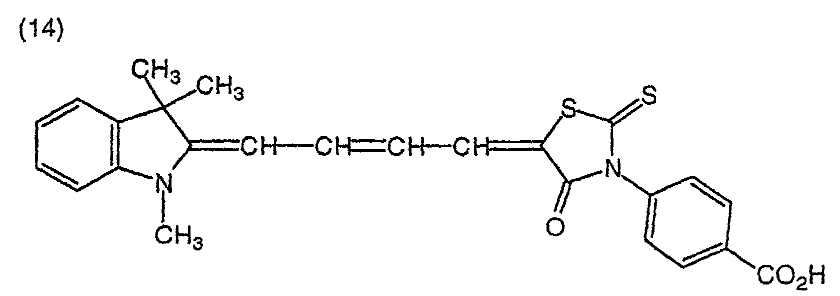

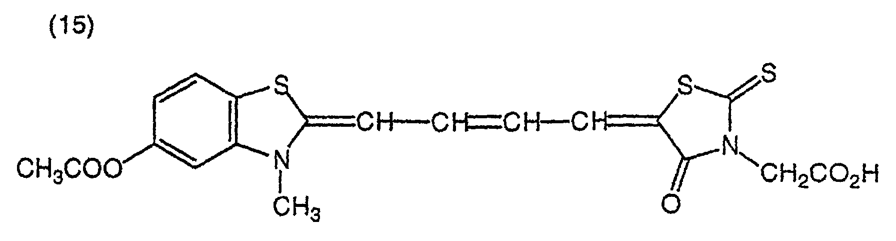

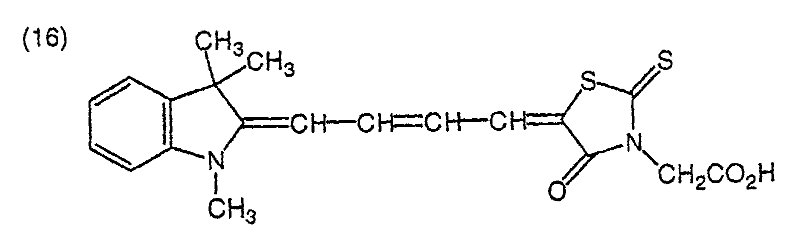

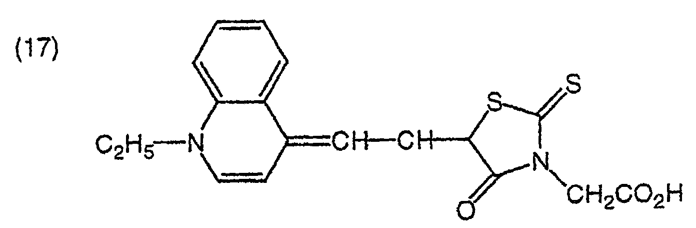

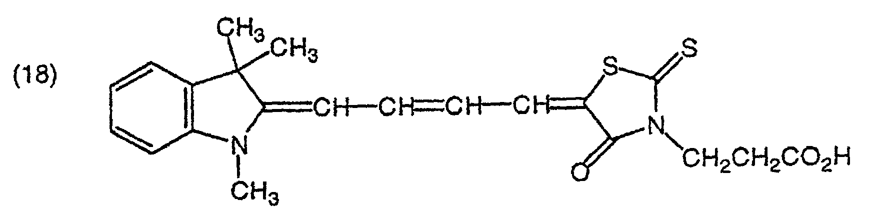

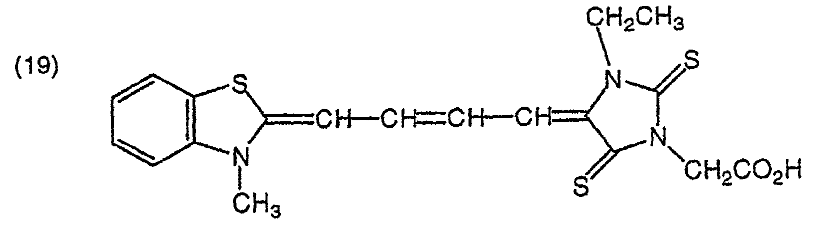

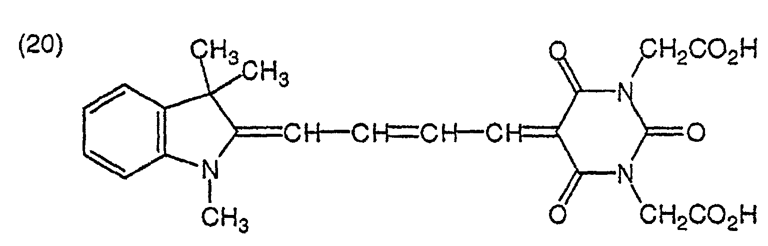

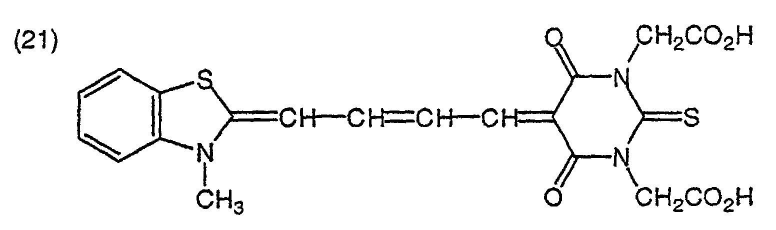

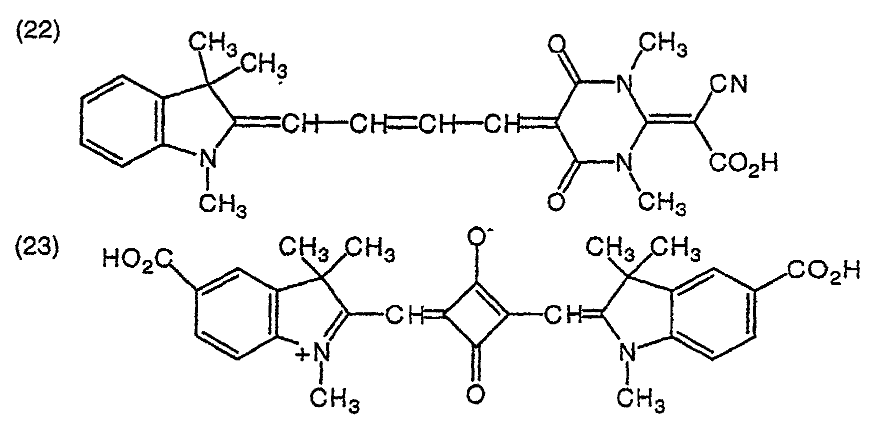

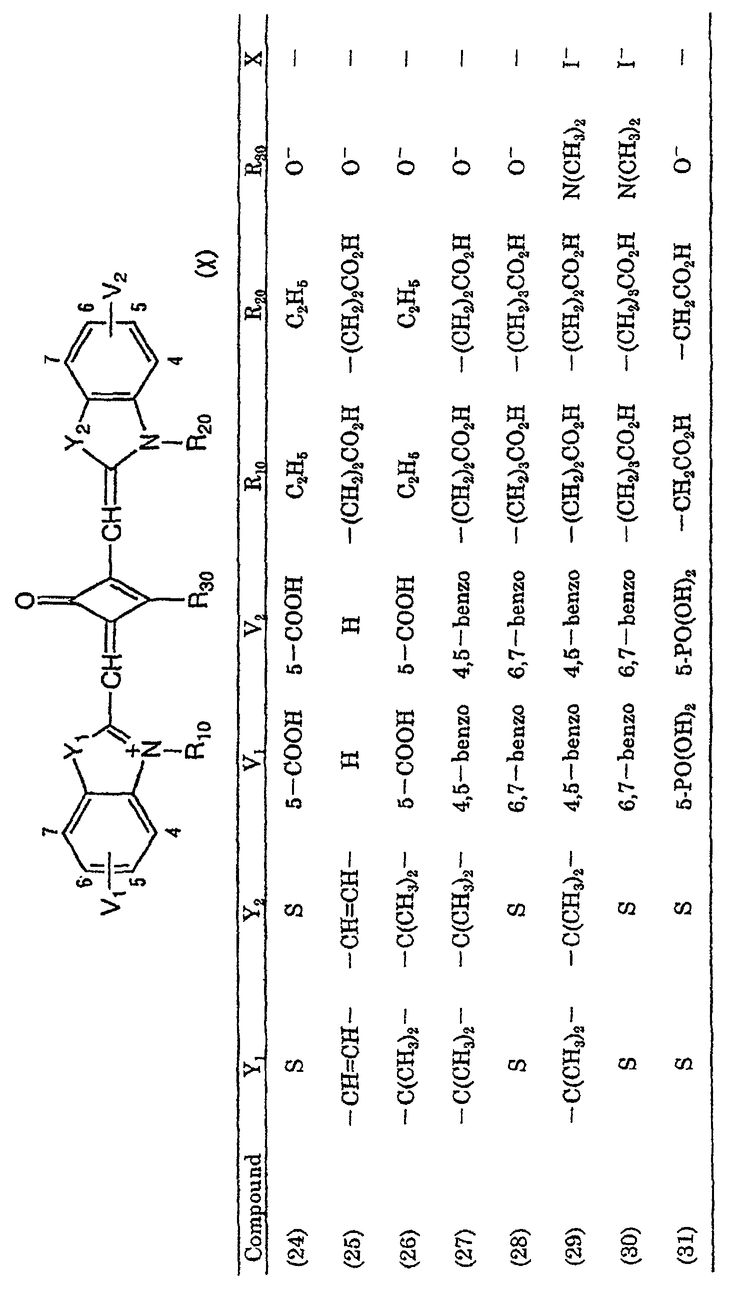

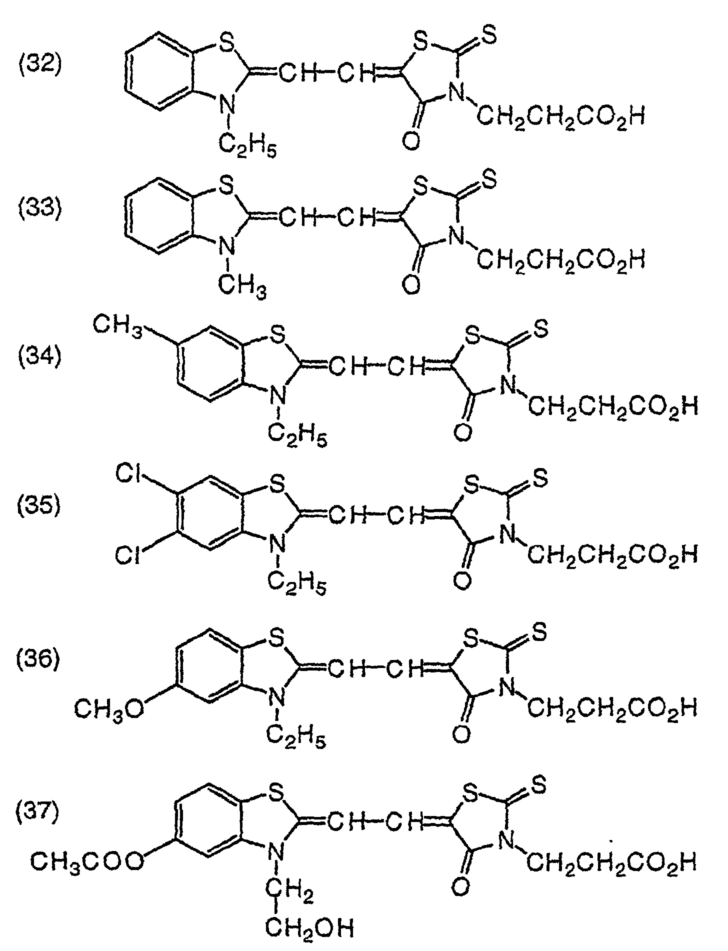

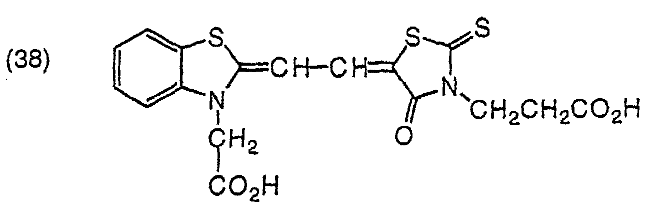

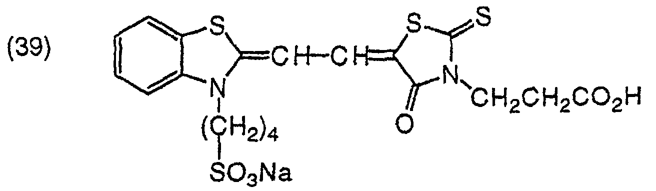

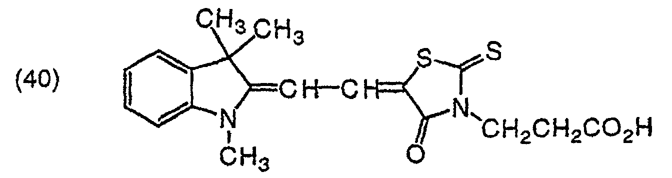

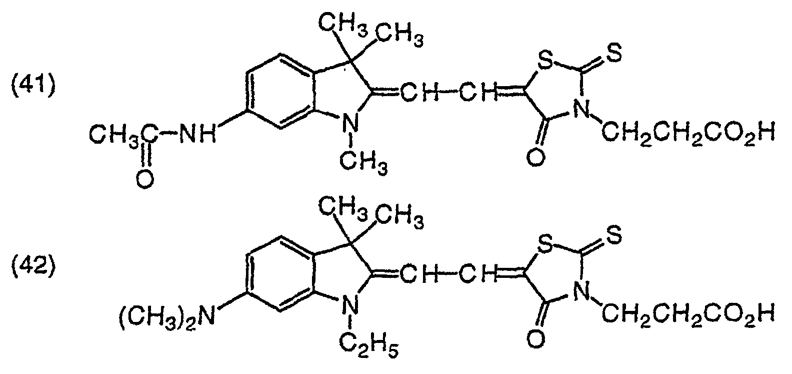

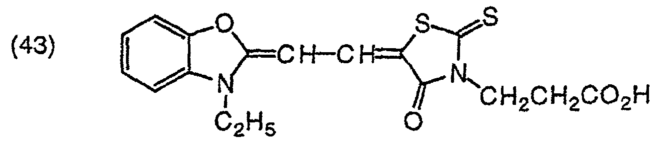

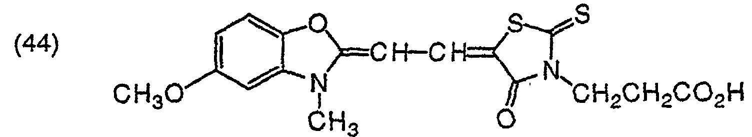

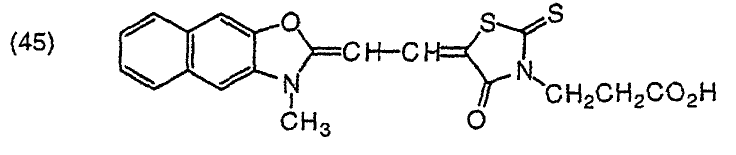

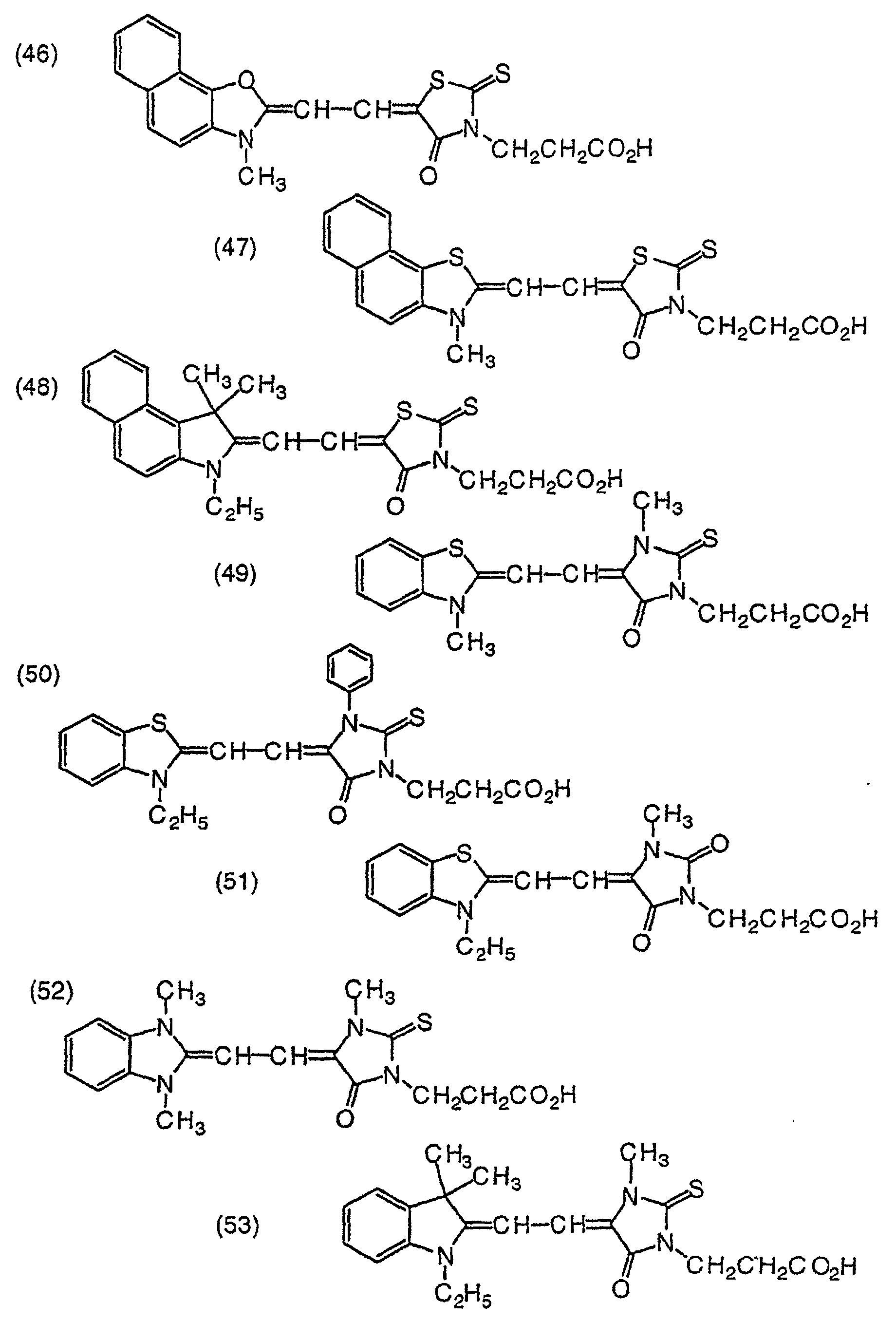

The polymethine dyes of general formulae (11) and (12) can be synthesized by the methods described in F.M. Harmer, Heterocyclic Compounds - Cyanine Dyes and Related Compounds, John Wiley & Sons, New York, London, 1964; D.M. Sturmer, Heterocyclic Compounds - Special topics in heterocyclic chemistry," Chap. 18, Sec. 14, pp. 482-515, John Wiley & Sons, New York, London, 1977; Rodd's Chemistry of Carbon Compounds, 2nd Ed., vol. IV, part B, 1977, Chap. 15, pp. 369-422, Elsevier Science Publishing Company Inc., New York; and British Patent No. 1,077,611.

The synthesis of the polymethine dyes used herein is illustrated by their synthesis examples. The synthesis examples are given for descriptive purpose only and not intended to limit the invention thereto.

### Synthesis Example 1

### Synthesis of Compound (1)

Compound (1) was synthesized by way of the synthesis route shown below.

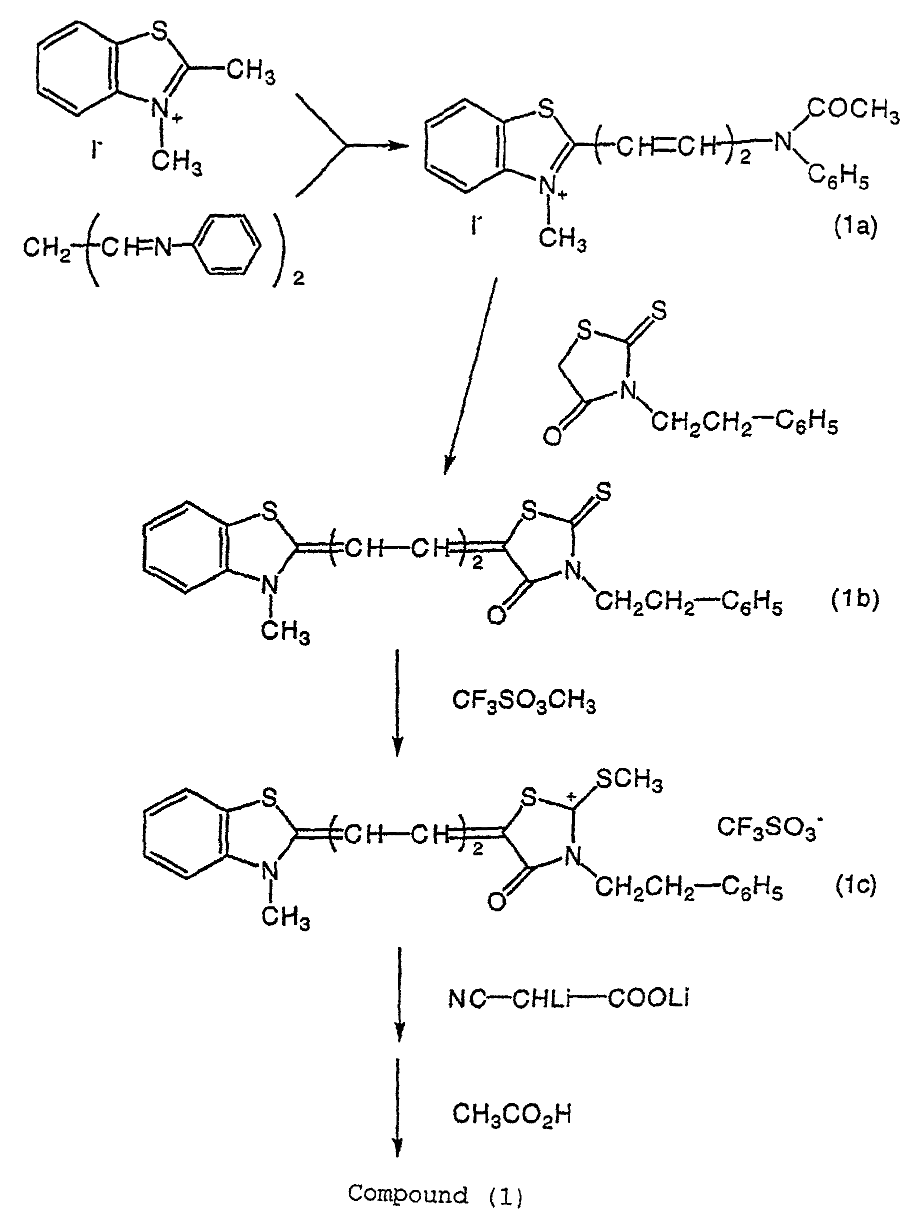

To 150 ml of acetic anhydride were added 40 g of 2,3-dimethylbenzothiazolium iodide and 51 g of malondialdehyde bisphenylimine. The mixture was heated and stirred at 140°C for 2 hours. The reaction solution was poured into 1 liter of ethyl acetate whereupon crystals precipitated. Filtration yielded 45 g of a compound (1a).

In 100 ml of methanol were dissolved 20 g of compound (1a) and 9.1 g of N-(2-phenylethyl)rhodanine. To the solution was added 5.31 g of triethylamine. This was stirred at 50°C for 10 minutes whereupon crystals precipitated. Filtration yielded 11.9 g of a compound (1b).

Compound (1b), 1.54 g, was dissolved in methylene chloride. To this solution at 10°C, 0.4 ml of methyl trifluoromethanesulfonate was gradually added dropwise to convert the compound (1b) to a compound (1c). In another container, 0.3 g of cyanoacetic acid was dissolved in 5 ml of tetrahydrofuran, and 3.6 ml of a solution containing 2 mol/liter of lithium diisopropylamide (by Aldrich Co.) was added at 10°C, yielding a light yellow suspension. The suspension was gradually added dropwise to the solution of compound (1c) at 0°C. The reaction solution was immediately poured into 200 ml of a 5% acetic acid aqueous solution whereupon 0.34 g of an end compound (1) was obtained in crystalline form.

Described below are the dye-sensitized photoelectric conversion device and photo-electrochemical cell of the invention to which the polymethine dyes are applied.

The dye-sensitized photoelectric conversion device of the invention is defined as comprising a conductive support and an electrode constructed by a layer (photosensitive layer) which is formed on the support by coating thereto semiconductor nanoparticulates having a polymethine dye adsorbed thereon. The photosensitive layer is designed in accordance with the intended application and may have a single layer construction or a multilayer construction. The dye in one photosensitive layer may be a single dye or a mixture of dyes. Light enters the photosensitive layer where it excites the dye. The excited dye possesses electrons of high energy, which are conveyed from the dye to the conduction band of the nanoparticulate semiconductor and then to the conductive support through diffusion. At this point, the dye molecules are in the oxidized state. The photo-electrochemical cell is designed such that electrons on the electrode perform work in an external circuit and then return to the dye in the oxidized state, while the dye-sensitized photoelectric conversion device serves as the negative electrode of the cell.

The conductive supports may be metal supports which themselves are electrically conductive or supports of glass or plastics having a conductive agent layer on their surface. In the latter case, the preferred conductive agents are metals such as platinum, gold, silver, copper, aluminum, rhodium, and indium, carbon, and conductive metal oxides such as indium-tin compound oxide and tin oxide doped with fluorine. The conductive agent layer is preferably about 0.05 to 10 µm thick.

It is recommended that the conductive supports have a lower surface resistivity. The preferred range of surface resistivity is up to 50 Ω/cm², more preferably up to 10 Ω/cm². The lower limit is not critical although it is usually about 0.1 Ω/cm².

It is also recommended that the conductive supports be substantially transparent. The term "substantially transparent" means that the light transmittance of the support is at least 10%, preferably at least 50%, more preferably at least 80%. As the transparent conductive support, glass or plastic supports having conductive metal oxide coated thereon are preferable. The coverage or weight of conductive metal oxide coated is preferably 0.1 to 100 g per square meter of the glass or plastic support. Where transparent conductive supports are used, it is desired that light enters the device from the support side.

In the photosensitive layer, nanoparticulates of metal chalcogenides (e.g., oxides, sulfides and selenides) or perovskite may be used as the nanoparticulate semiconductor. Examples of the metal chalcogenides include oxides of titanium, tin, zinc, tungsten, zirconium, hafnium, strontium, indium, cerium, yttrium, lanthanum, vanadium, niobium, and tantalum, cadmium sulfide, and cadmium selenide. Examples of the perovskite are strontium titanate and calcium titanate. Of these, titanium oxide, zinc oxide, tin oxide and tungsten oxide are especially preferred.

The semiconductor nanoparticulates preferably have a mean particle size of 0.001 to 1 µm expressed by the diameter of a circle of equivalent area to the projected area of a primary particle. When dispersed, the nanoparticulates have a mean particle size of 0.01 to 100 µm.

Various methods are employable for coating semiconductor nanoparticulates to a conductive support. Exemplary methods are a method of applying a dispersion liquid or colloid solution of semiconductor nanoparticulates onto a conductive support, and a method of applying a semiconductor nanoparticulate precursor onto a conductive support and allowing the precursor to be hydrolyzed with moisture in air, thereby forming a semiconductor nanoparticulate coating. The dispersion liquid of semiconductor nanoparticulates can be prepared by such methods as grinding in a mortar, milling and dispersing in a mill, and synthesizing a semiconductor under such conditions that the semiconductor may precipitate in a solvent as nanoparticulates. The dispersing media may be water or various organic solvents such as methanol, ethanol, dichloromethane, acetone, acetonitrile, and ethyl acetate. In forming a dispersion, polymers, surfactants, acids or chelates may be used as the dispersant if necessary.

Semiconductor nanoparticulates are desired to have a greater surface area so that more dye may be adsorbed thereon. The semiconductor nanoparticulate layer as applied onto the support should preferably have a surface area which is greater than the projected area by a factor of at least 10, more preferably at least 100. No upper limit is imposed on the surface area although the upper limit is usually a multiplication factor of about 5,000.

In general, as the semiconductor nanoparticulate layer becomes thicker, the amount of the dye carried per unit projected area increases so that the capture rate of light becomes higher, but the loss by charge recombination becomes greater because the diffusion distance of generated electrons increases. For this reason, the semiconductor nanoparticulate layer (i.e., photosensitive layer) has an appropriate range of thickness which is typically 0.1 to 100 µm. When the semiconductor nanoparticulate layer is used in a photo-electrochemical cell, an appropriate thickness is 1 to 50 µm, especially 3 to 30 µm. After coating on a support, semiconductor nanoparticulates may be fired at a temperature of about 100 to 800°C for about 10 minutes to about 10 hours in order to bring the particulates into close contact.

The coverage or weight of semiconductor nanoparticulates coated is preferably 0.5 to 500 g, more preferably 5 to 100 g per square meter of the support.

In the second embodiment the semiconductor nanoparticulates are sensitized by adsorption of the polymethine dye. Most often the dye is adsorbed to semiconductor nanoparticulates by immersing fully dry semiconductor nanoparticulates in a dye solution for a long period of time. The dye solution may be heated at 50 to 100°C if desired. The dye adsorption may be done either prior to or subsequent to the coating of semiconductor nanoparticulates. It is also acceptable that semiconductor nanoparticulates and the dye are simultaneously coated whereupon adsorption takes place. It is desirable to remove the unadsorbed dye by washing. Where the coated film is fired, it is preferred that the dye adsorption be done subsequent to firing. It is especially preferred that the dye is quickly adsorbed to the coated film after firing and before water adsorbs to the surface of the coated film. For adsorption, a single dye or a mixture of dyes may be used. In the latter case, there may be used a mixture of polymethine dyes according to the invention, or a mixture of a polymethine dye according to the invention and a complex dye as disclosed in USP 4,927,721, 4,684,537, 5,084,365, 5,350,644, 5,463,057, 5,525,440, and JP-A 249790/1995. For the application to photo-electrochemical cells, dyes are selected and mixed so as to make the wavelength range of photoelectric conversion as broad as possible.

The total amount of the dyes used is preferably 0.01 to 100 mmol, more preferably 0.1 to 50 mmol, and most preferably 0.5 to 10 mmol, per square meter of the support. The proportion of the polymethine dye used should preferably be at least 5 mol% of the entire dyes.

The amount of the dyes adsorbed to semiconductor nanoparticulates is preferably 0.001 to 1 mmol, more preferably 0.1 to 0.5 mmol, per gram of the semiconductor nanoparticulates. The amounts of the dye in these ranges ensure sufficient sensitization of the semiconductor. Less amounts of the dye would provide insufficient sensitization whereas excessive amounts of the dye would reduce the sensitization effect because of floating of the dye which is not adsorbed to the semiconductor.

Also for the purpose of reducing the association or interaction between dyes, a colorless compound may be co-adsorbed. Hydrophobic compounds to be co-adsorbed are steroid compounds having a carboxyl group, e.g., cholic acid, deoxycholic acid, and chenodeoxycholic acid shown below.

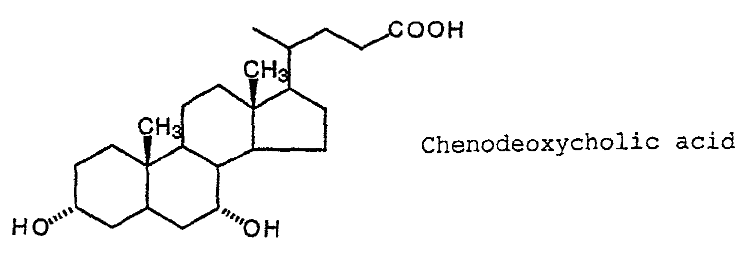

After the adsorption of the dye, the semiconductor nanoparticulates may be surface treated with amines. Preferred amines are pyridine, 4-tert-butylpyridine and polyvinylpyridine. The amines may be used as such if they are liquid or as solutions in organic solvents.

In the practice of the invention, the conductive agent and the nanoparticulate semiconductor may be in mixed state as a result of interdiffusion in proximity to the interface between the conductive support and the photosensitive layer.

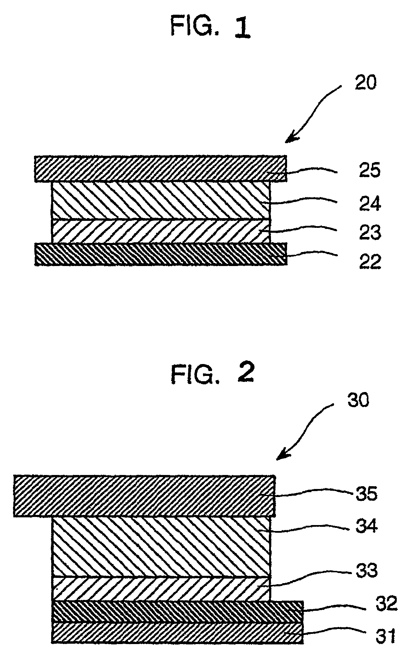

The dye-sensitized photoelectric conversion device thus constructed can be applied to various sensors and photo-electrochemical cells. The application to photo-electrochemical cells requires an electric charge transfer layer and a counter electrode as shown in FIG. 1.

In FIG. 1, the photo-electrochemical cell 20 includes a photosensitive layer 23, an electric charge transfer layer 24 and a counter electrode 25 stacked on a conductive support 22 in the descried order.

Now, the charge transfer layer and the counter electrode are described in detail.

The charge transfer layer has a function of supplementing electrons to the dye in the oxidized state. Typical examples include a solution of an oxidation-reduction pair in an organic solvent, a gel electrolyte wherein a polymer matrix is impregnated with a solution of an oxidation-reduction pair in an organic solvent, and a molten salt containing an oxidation-reduction pair.

Examples of the oxidation-reduction pair include combinations of iodine with a iodide (e.g., lithium iodide, tetrabutyl ammonium iodide and tetrapropyl ammonium iodide), combinations of an alkylviologen (e.g., methylviologen chloride, hexylviologen bromide and benzylviologen tetrafluoroborate) with a reduced form thereof, combinations of a polyhydroxybenzene (e.g., hydroquinone and naphthohydroquinone) with an oxidized form thereof, and combinations of divalent and trivalent ion complexes (e.g., potassium ferricyanate and potassium ferrocyanate). Of these, the combinations of iodine with iodides are preferred. The organic solvents in which the oxidation-reduction pair is dissolved include aprotic polar solvents such as acetonitrile, propylene carbonate, ethylene carbonate, dimethylformamide, dimethyl sulfoxide, sulfolane, 1,3-dimethylimidazoline, and 3-methyloxazolidinone. The polymers used as the matrix of the gel electrolyte are, for example, polyacrylonitrile and polyvinylidene fluoride. Examples of the molten salt include lithium iodide and at least one lithium salt (such as lithium acetate or lithium perchlorate). The molten salt may be improved in fluidity at room temperature by mixing therewith a polymer such as polyethylene oxide. The amount of the polymer added to this end is usually 1 to 50% by weight.

The oxidation-reduction pair must be present in a sufficient concentration to become an electron carrier. When used in the solution or gel electrolyte form, the total concentration of the oxidation-reduction pair in the solution is preferably at least 0.01 mol/liter, more preferably at least 0.1 mol/liter, most preferably at least 0.3 mol/liter. The upper limit of concentration is not critical although it is usually about 5 mol/liter.

The counter electrode serves as a positive electrode in a photo-electrochemical cell. The counter electrode is usually of the same definition as the conductive support described above. In the case of a strength-sustainable construction, the support is not always necessary. The provision of the support is advantageous from the sealing aspect.

In order that light reach the photosensitive layer, at least one of the conductive support and the counter electrode must be substantially transparent. The photo-electrochemical cell of the invention favors the construction that the conductive support is transparent and sunlight is incident on the support side. Better results are obtained in this embodiment when the counter electrode has light reflecting property. The counter electrode in the photo-electrochemical cell may be a glass or plastic member having a metal or conductive oxide evaporated thereon. A glass member having platinum deposited thereon is especially preferred.

In the photo-electrochemical cell of the invention, the side of the cell may be sealed with a polymer or adhesive for preventing the components from evaporating off.

The thus obtained photo-electrochemical cell, as measured at AM 1.5G and 100 mW/cm², exhibits an open voltage of 0.01 t0 3 volts, a short-circuit current density of 0.001 to 20 mA/cm², a form factor of 0.1 to 0.99, and a conversion efficiency of 0.001 to 25%.

### EXAMPLE

Examples of the invention are given below for illustrating the preparation of a dye-sensitized photoelectric conversion device and a regenerative photo-electrochemical cell according to the invention, but the invention is not limited to these examples.

### Example 1

### Preparation of titanium dioxide dispersion

A stainless steel vessel having an internal volume of 200 ml and lined on the inside surface with Teflon was charged with 15 g of titanium dioxide (Degussa P-25 by Nippon Aerosil K.K.), 45 g of water, 1 g of a dispersant (Triton X-100 by Aldrich), and 30 g of zirconia beads having a diameter of 0.5 mm (Nikkato K.K.). Using a sand grinder mill (Imex K.K.), the contents were dispersed at 1,500 rpm for 2 hours. The zirconia beads were removed from the dispersion by filtration. The dispersed titanium dioxide had a mean particle size of 2.5 µm as measured by Master Sizer by Malvern.

### Fabrication of photoelectric conversion device

On the conductive surface side of a conductive glass piece coated with fluorine-doped tin oxide (TCO glass by Asahi Glass K.K. cut to 20 mm x 20 mm), the dispersion prepared above was applied using a glass bar. The conductive glass had a surface resistivity of about 30 Ω/cm². More particularly, eight glass pieces were closely arranged in two columns (2x4) with the conductive surface side faced upward. Adhesive tape strips were attached to opposite end portions (3 mm from the end) of the two-columns of glass pieces. The dispersion was applied to the set of eight glass pieces between the tape strips and spread thereon by sliding a glass bar on the parallel tape strips which serve as a spacer and mask. After application, the coating was air dried for one day at room temperature and the adhesive tape strips were peeled off. The end portions where the adhesive tape strips had been attached were later used to provide electrical connection with a tester for the measurement of photocurrent. Next, the glass pieces were placed in an electric furnace (muffle furnace Model FP-32 by Yamato Science K.K.) where they were fired at 450°C for 30 minutes. The glass pieces were taken out and cooled down whereupon they were immersed for 3 hours in an ethanol solution containing 3x10⁻⁴ mol/l of an inventive dye as shown in Table 4. The dye-adsorbed glass pieces were immersed in a 10 wt% ethanol solution of 4-tert-butylpyridine for 30 minutes, washed with ethanol and air dried. The thus obtained photosensitive layer was 10 µm thick, and the weight of semiconductor nanoparticulates coated was 20 g/m. Depending an the type of dye, the weight of the dye coated was selected as appropriate in the range of 0.1 to 10 mmol/m².

### Measurement of reflection spectrum

The photoelectric conversion device was measured for reflection spectrum using a spectrophotometer equipped with an integrating sphere (U-3500 by Hitachi K.K.). Table 1 shows the wavelength and absorbance of an absorption peak situated an the longest wavelength side.

### Fabrication of photo-electrochemical cell

There was fabricated a photo-electrochemical cell of the structure shown in FIG. 2 which is a modification of the structure shown in FIG. 1. The cell 30 of FIG. 2 utilizes the photoelectric conversion device comprising a photosensitive layer 33 an a conductive support which has a conductive agent layer 32 an a glass support 31. An electrolytic solution layer 34 serving as a charge transfer layer is situated an the photosensitive layer 33. A platinum-deposited glass plate 35 is rested thereon as a counter electrode. In the fabrication process, the platinum-deposited glass plate of the same size was rested an the photoelectric conversion device (see FIG. 2). Actually, they were offset such that the uncoated portion of the photoelectric conversion device might not contact the platinum-deposited glass plate. By utilizing a capillary phenomenon, an electrolytic solution was penetrated into the interface or space between the glass plates. The electrolytic solution contained 0.05 mol/l of iodine and 0.5 mol/l of lithium iodide in a mixture of acetonitrile and N-methyl-2-oxazolidinone in a volume ratio of 90:10.

### Measurement of photoelectric conversion efficiency

Light of a 500-W xenon lamp (Ushi K.K.) was passed through an AM 1.5G filter (by Oriel Co.) and a sharp cut filter Kenko L-42, obtaining simulated sunlight free of ultraviolet radiation. The intensity of light was 50 mW/cm².

While the simulated sunlight was irradiated to the photoelectric conversion device, the electricity generated in the cell was measured by a current-voltage tester (Keithley SMU238). The open circuit voltage (Voc), short-circuit current density (Jsc), fill factor (ff), and conversion efficiency (η) of this photochemical cell were reported in Table 1.

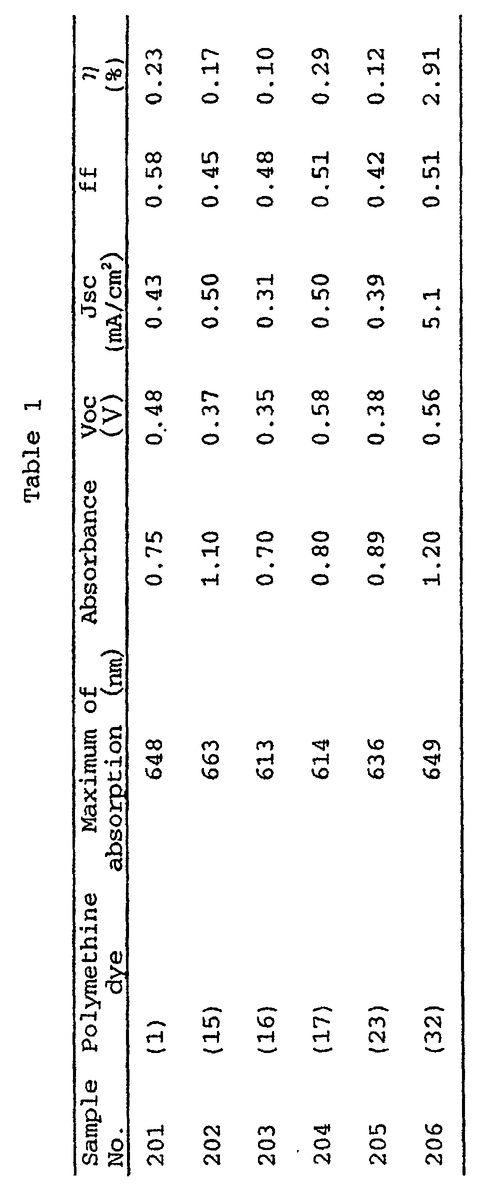

### Example 2

Photoelectric conversion devices (sample Nos. 207 to 212) were fabricated as in Example 1 except that 3x10⁻³ mol/1 of chenodeoxycholic acid was added to the dye solution whereby the dye and chenodeoxycholic acid were co-adsorbed an surfaces of semiconductor nanoparticulates. They were tested as in Example 1, with the results shown in Table 2.

**Table 2**

| Sample No. | Polymethine dye | Voc (V) | Jsc (mA/cm²) | ff | η (%) |
|---|---|---|---|---|---|
| 207 | (1) | 0.51 | 1.20 | 0.61 | 0.77 |
| 208 | (15) | 0.43 | 1.09 | 0.53 | 0.50 |
| 209 | (16) | 0.42 | 0.88 | 0.54 | 0.40 |
| 210 | (17) | 0.61 | 1.51 | 0.58 | 1.06 |
| 211 | (23) | 0.58 | 4.3 | 0.62 | 3.09 |
| 212 | (32) | 0.56 | 5.1 | 0.52 | 2.97 |

As seen from Table 1, all the inventive dyes show excellent photoelectric conversion properties. As seen from Table 2, the addition of chenodeoxycholic acid to the dye solution is effective for improving photoelectric conversion properties. An outstanding improvement was made with compound (23) falling in the scope of formula (13).

According to the invention, a photoelectric conversion device comprising a specific organic dye for sensitization is provided. Using the photoelectric conversion device, a photo-electrochemical cell can be constructed.

Reasonable modifications and variations are possible from the foregoing disclosure without departing from the scope of the present invention as defined by the claims.

## Claims

1. Å photoelectric conversion device comprising at least a conductive support and a photosensitive layer containing semiconductor nanoparticulates sensitised with a polymethine dye,
**characterized in that** the semiconductor nanoparticulates are sensitised with a polymethine dye of the following general formulae (11), (13) or (14) 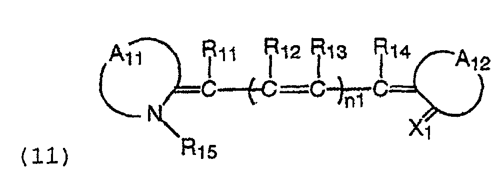 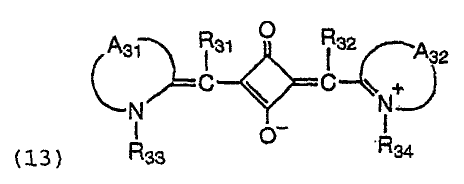 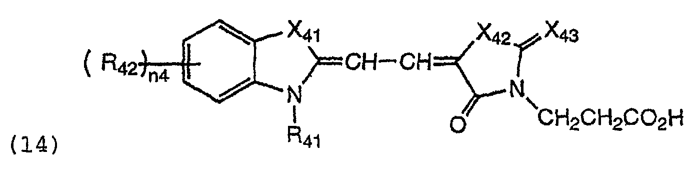 wherein in formula (11), R₁₁, R₁₂, R₁₃, and R₁₄ each are hydrogen or monovalent substituents, or R₁₁ to R₁₄ may bond together to form a ring, R₁₅ is alkyl, A₁₁ and A₁₂ each are a group of atoms to form a 3 to 9-membered ring with the carbon and nitrogen atoms, X₁ is oxygen or sulfur, n₁ is an integer of 1 to 4, the compound of formula (11) has at least one carboxyl group as a substituent, and the compound of formula (11) may have a counter ion depending on the overall electric charge of the molecule;
in formula (13) R₃₁ and R₃₂ each are hydrogen or monovalent substituents, or R₃₁ and R₃₂ may bond together to form a ring, R₃₃ and R₃₄ each are alkyl, A₃₁ and A₃₂ each are a group of atoms to form a 3 to 9-membered ring with the carbon and nitrogen atoms, except a benzothiazoline, benzothiazole ring and naphthothiazole, the compound of formula (13) has at least one carboxyl group as a substituent, and the compound of formula (13) may have a counter ion depending on the overall electric charge of the molecule;
in formula (14), R₄₁ is alkyl, R₄₂ is a substituent, X₄₁ is an alkylene group, alkylimino group, arylimino group, oxygen atom or sulfur atom, X₄₂ is an alkylimino group, arylimino group, oxygen atom or sulfur atom, X₄₃ is an oxygen or sulfur atom, n₄ is an integer of 0 to 4, and the compound of formula (14) may have a counter ion depending on the overall electric charge of the molecule.

2. The photoelectric conversion device of claim 1, wherein in the polymethine dye of formula (11), the heterocycle that A₁₁ forms with the carbon and nitrogen atoms is benzothiazoline, indoline, naphthothiazoline or benzindoline.

3. The photoelectric conversion device of claim 1 or 2, wherein in the polymethine dye of formula (11), the heterocycle that A₁₂ forms with the carbon atoms is rhodanine.

4. The photoelectric conversion device of any one of claims 1 to 3, wherein in formula (11), the carboxyl group is attached directly or via an alkylene group to the heterocycle that A₁₂ forms with the carbon atoms.

5. The photoelectric conversion device of claim 1, wherein in the polymethine dye of formula (13) the heterocycle that A₃₁ forms with the carbon and nitrogen atoms is indoline, naphthothiazoline or benzindoline, and the heterocycle that A₃₂ forms with the carbon and nitrogen atoms is selected from quaternary salts of indolenine and benzindolenine.

6. The photoelectric conversion device of claim 1, wherein in formula (14), both X₄₂ and X₄₃ are sulfur atoms.

7. The photoelectric conversion device of any one of claims 1 to 6, wherein a steroid compound having a carboxyl group is adsorbed to the semiconductor nanoparticulates along with the polymethine dye.

8. A photo-electrochemical cell comprising the photoelectric conversion device of any one of claims 1 to 7, an electric charge transfer layer and a counter electrode.

## Patentansprüche

1. Photoelektrische Konversionsvorrichtung, umfassend wenigstens einen leitenden Träger und eine photoempfindliche Schicht, enthaltend einen aus Nanopartikeln bestehenden Halbleiterstoff, welcher mit einem Polymethinfarbstoff sensibilisiert ist, **dadurch gekennzeichnet, dass** der aus Nanopartikeln bestehende Halbleiterstoff sensibilisiert ist mit einem Polymethinfarbstoff der folgenden allgemeinen Formeln (11), (13) oder (14) 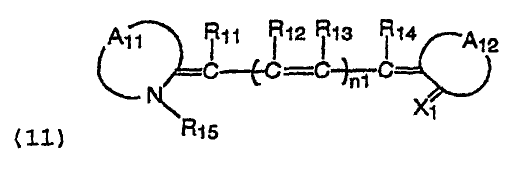 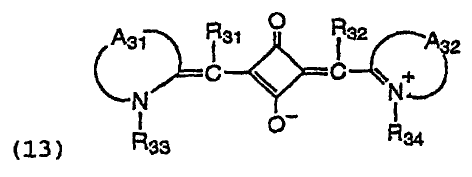 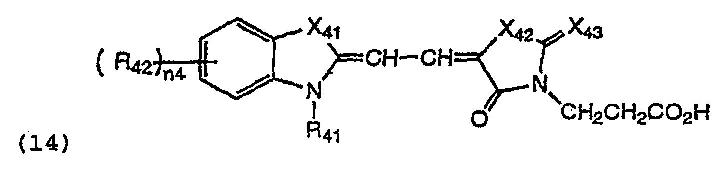 worin in Formel (11) R₁₁, R₁₂, R₁₃ und R₁₄ jeweils Wasserstoff oder einwertige Substituenten sind, oder R₁₁ bis R₁₄ können unter Ausbildung eines Rings miteinander verbunden sein, R₁₅ bedeutet Alkyl, A₁₁ und A₁₂ bedeuten jeweils eine Gruppe aus Atomen zur Ausbildung eines 3- bis 9-gliedrigen Rings mit den Kohlenstoff- und Stickstoffatomen, X₁ bedeutet Sauerstoff oder Schwefel, n₁ ist eine ganze Zahl von 1 bis 4, wobei die Verbindung der Formel (11) wenigstens eine Carboxylgruppe als Substituent aufweist, und die Verbindung der Formel (11) kann ein Gegenion besitzen, in Abhängigkeit der gesamten elektrischen Ladung des Moleküls;
worin in Formel (13) R₃₁ und R₃₂ jeweils Wassérstoff oder einwertige Substituenten sind, oder R₃₁ und R₃₂ können miteinander zur Ausbildung eines Rings verbunden sein, R₃₃ und R₃₄ sind jeweils Alkyl, A₃₁ und A₃₂ sind jeweils eine Gruppe aus Atomen zur Ausbildung eines 3- bis 9-gliedrigen Rings mit den Kohlenstoff- und Stickstoffatomen, mit Ausnahme von einem Benzothiazolin, einem Benzothiazolring und Naphthothiazol, wobei die Verbindung der Formel (13) wenigstens eine Carboxylgruppe als Substituent aufweist, und die Verbindung der Formel (13) ein Gegenion besitzen kann, in Abhängigkeit der gesamten elektrischen Ladung des Moleküls;
worin in Formel (14) R₄₁ für Alkyl steht, R₄₂ ist ein Substituent, X₄₁ bedeutet eine Alkylengruppe, Alkyliminogruppe, Aryliminogruppe, Sauerstoffatom oder Schwefelatom, X₄₂ steht für eine Alkyliminogruppe, Aryliminogruppe, Sauerstoffatom oder Schwefelatom, X₄₃ steht für ein Sauerstoffoder Schwefelatom, n₄ ist eine ganze Zahl von 0 bis 4, und die Verbindung der Formel (14) kann ein Gegenion aufweisen, in Abhängigkit von der gesamten elektrischen Ladung des Moleküls.

2. Photoelektrische Konversionsvorrichtung nach Anspruch 1, worin bei dem Polymethinfarbstoff der Formel (11) der Heterozyklus, den A₁₁ mit den Kohlenstoff- und Stickstoffatomen bildet, Benzothiazolin, Indolin, Naphthothiazolin oder Benzindolin ist.

3. Photoelektrische Konversionsvorrichtung nach Anspruch 1 oder 2, worin bei dem Polymethinfarbstoff der Formel (11) der Heterozyklus, den A₁₂ mit den Kohlenstoffatomen bildet, Rhodanin ist.

4. Photoelektrische Konversionsvorrichtung nach einem der Ansprüche 1 bis 3, worin in Formel (11) die Carboxylgruppe direkt oder über eine Alkylengruppe and den Heterozyklus gebunden ist, welcher A₁₂ mit den Kohlenstoffatomen bildet.

5. Photoelektrische Konversionsvorrichtung nach Anspruch 1, worin bei dem Polymethinfarbstoff der Formel (13) der Heterozyklus, den A₃₁ mit den Kohlenstoff- und Stickstoffatomen bildet, Indolin, Naphthothiazolin oder Benzindolin ist, und der Heterozyklus, den A₃₂ mit den Kohlenstoffund Stickstoffatomen bildet, ausgewählt ist aus quaternären Salzen von Indolenin nd Benzindolenin.

6. Photoelektrische Konversionsvorrichtung nach Anspruch 1, worin in Formel (14) beide X₄₂ und X₄₃ Schwefelatome sind.

7. Photoelektrische Konversionsvorrichtung nach einem der Ansprüche 1 bis 6, worin eine Steroidverbindung mit einer Carboxylgruppe adsorbiert ist an den aus Nanopartikeln bestehenden Halbleiterstoff zusammen mit dem Polymethinfarbstoff.

8. Photoelektrochemische Zelle, umfassend die photoelektrische Konversionsvorrichtung nach einem der Ansprüche 1 bis 7, eine elektrische Ladungstransferschicht und eine Gegenelektrode.

## Revendications

1. Dispositif de conversion photoélectrique comprenant au moins un support conducteur et une couche photosensible contenant des nanoparticules semi-conductrices sensibilisées par un colorant polyméthine, **caractérisé en ce que** les nanoparticules semi-conductrices sont sensibilisées par un colorant polyméthine ayant la formule générale (11), (13) ou (14) 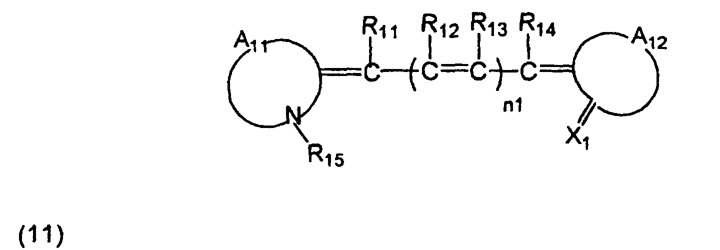 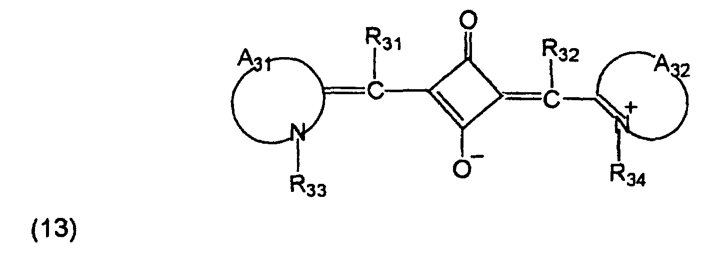 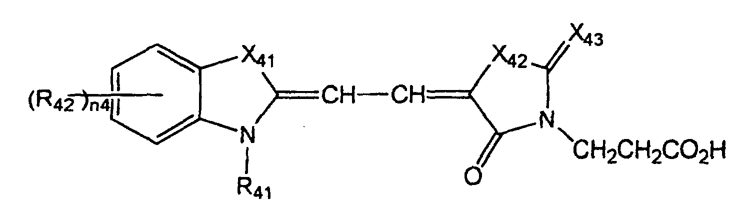 où dans la formule (11), R₁₁, R₁₂, R₁₃, et R₁₄ sont chacun l'hydrogéna ou des substituants monovalents, ou R₁₁ à R₁₄ peuvent être liés ensembles pour former un cycle, R₁₅ est un alkyle, A₁₁ et A₁₂ sont chacun un groupe d'atomes pour former un cycle de 3 à 9 membres avec les atomes de carbone et d'azote, X₁ est l'oxygène ou le soufre, n₁ est un nombre entier de 1 à 4, le composé de formule (11) posséda au mois un groupe carboxyle ou un substituant, et le composé de formule (11) peut avoir un contre-ion en fonction de la charge électrique totale de la molécule ;
dans la formule (13) R₃₁ et R₃₂ sont chacun l'hydrogène ou des substituants monovalents, ou R₃₁ et R₃₂ peuvent être liés ensembles pour former un cycle, R₃₃ et R₃₄ sont chacun un alkyle, A₃₁ et A₃₂ sont chacun un groupe d'atomes pour former un cycle de 3 à 9 membres avec les atomes de carbone et d'azote, excepté une benzothiazoline, un cycle benzothiazole et naphtothiazole, le composé de formule (13) possède au moins un groupe carboxyle comme substituant, et le composé de formule (13) peut avoir un contre-ion en focntion de la charge électrique totale de la molécule ;
dans la formule (14), R₄₁ est un alkyle, R₄₂ est un substituant, X₄₁ est un groupe alkylène, un groupe alkylimino, un groupe arylimino, un atome d'oxygène ou un atome de soufre, X₄₂ est un groupe alkylimino, un groupe arylimino, un atome d'azote ou un atome de soufre, X₄₃ est un atome d'oxygène ou de soufre, n₄ est un nombre entier de 0 à 4, et le composé de formule (14) peut avoir un contre-ion en fonction de la charge électrique totale de la molécule.

2. Dispositif de conversion photoélectrique selon la revendication 1, dans lequel dans le colorant polyméthine de formule (11), l'hétérocycle que forme A₁₁ avec les atomes de carbone et d'azote est la benzothiazoline, l'indoline, la naphtothiazoline ou la benzindoline.

3. Dispositif de conversion photoélectrique selon la revendication 1 ou 2, dans lequel le colorant polyméthine de formule (11), l'hétérocycle que forme A₁₂ avec les atomes de carbone est la rhodanine.

4. Dispositif de conversion photoélectrique selon l'une quelconque des revendications 1 à 3, dans lequel dans la formule (11), le groupe carboxyle est relié directement ou via un groupe alkylène à I'hétérocycle que A₁₂ forme avec les atomes de carbone.

5. Dispositif de conversion photoélectrique selon la revendication 1, dans lequel dans le colorant polyméthine de formule (13) l'hétérocycle que A₃₁ forme avec les atomes de carbone et d'azote est l'indoline, la naphtothiazoline et la benzindoline, et l'hétérocycle que A₃₂ forme avec les atomes de carbone et d'azote est choisi parmi les sels quatemaires d'indolénine et de benzindolénine.

6. Dispositif de conversion photoélectrique selon la revendication 1, dans lequel dans la formule (14), les deux X₄₂ et X₄₃ sont des atomes de soufre.

7. Dispositif de conversion photoélectrique selon l'une quelconque des revendications 1 à 6, dans lequel un composé stéroïde ayant un groupe carboxyle est adsorbé par les nanoparticules semi-conductrices avec le colorant polyméthine.

8. Cellule photo-électrochimique comprenant le dispositif de conversion photoélectrique selon l'une quelconque des revendications 1 à 7, une couche de transfert de charge électrique et une contre-électrode.
